# EUROPÄISCHE PATENTSCHRIFT

(11) **EP 4 078 098 B1**
(45) Veröffentlichungstag und Bekanntmachung des Hinweises auf die Patenterteilung: **26.06.2024**
(21) Anmeldenummer: 20811308.4
(22) Anmeldetag: 20.11.2020
(51) Int. Cl.: G01F 1/58, G01F 15/14

(54) **MAGNETISCH-INDUKTIVES DURCHFLUSSMESSGERÄT**
MAGNETIC-INDUCTIVE FLOW METER
DÉBITMÈTRE À INDUCTION MAGNÉTIQUE

(30) Priorität: 16.12.2019 DE 102019134599
(43) Veröffentlichungstag der Anmeldung: 26.10.2022
(73) Patentinhaber: Endress + Hauser Flowtec AG, 4153 Reinach (CH)
(72) Erfinder: VOIGT, Frank, 79576 Weil am Rhein (DE); ZIEGLER, Steffen, 79650 Schopfheim (DE); WOHLGEMUTH, Werner, 4206 Seewen (DE)
(74) Vertreter: Penner, Paul
(86) Internationale Anmeldenummer: PCT/EP2020/082920
(87) Internationale Veröffentlichungsnummer: WO 2021/121866

(56) Entgegenhaltungen:
- DE-A1- 10 358 268
- DE-A1-102013 114 429
- JP-A- H0 518 800
- US-A- 5 280 727
- US-A1- 2003 159 522

## Beschreibung

Die Erfindung betrifft ein magnetisch-induktives Durchflussmessgerät.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss *V̇* ermittelt werden.

Magnetisch-induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Die DE 103 58 268 A1 lehrt ein magnetisch-induktives Durchflussmessgerät mit einer im Einlauf- und Auslaufbereich des Messrohres eingearbeitete Ringnut auf, in welcher sich der Stützkörper zum Stabilisieren des Liners erstreckt. Eine derartige Ringnut verringert die Rissbildung im Liner bei Temperaturänderungen und das Verschieben des Stützkörpers in Längsrichtung trotz Materialschwindungen. Nachteilig ist jedoch, dass der Stützkörper nicht ausreichend gegen Verdrehungen um die Längsachse des Messrohres gesichert ist.

Der Erfindung liegt die Aufgabe zugrunde ein magnetisch-induktives Durchflussmessgerät bereitzustellen, dessen Stützkörper besser gegen Verdrehungen gesichert ist.

Die Aufgabe wird gelöst durch das magnetisch-induktive Durchflussmessgerät nach Anspruch 1.

Das erfindungsgemäße magnetisch-induktives Durchflussmessgerät zum Ermitteln einer strömungsgeschwindigkeitsabhängigen, in einem fließfähigen Medium induzierten Messgröße umfasst:
- ein Messrohr zum Führen des fließfähigen Mediums in eine Fließrichtung,
   wobei das Messrohr einen Trägerkörper umfasst,
   wobei das Messrohr einen Einlaufbereich umfasst, in welchem der Trägerkörper eine erste Vertiefung aufweist, die sich an einer Innenseite des Trägerkörpers befindet,
   wobei sich die erste Vertiefung fortlaufend in Fließrichtung erstreckt,
   wobei das Messrohr einen Stützkörper zum Stabilisieren eines Liners umfasst,
   wobei der Stützkörper zwischen dem Trägerkörper und dem Liner angeordnet ist,
   wobei sich der Stützkörper in die erste Vertiefung erstreckt und somit formschlüssig mit dem Trägerkörper verbunden ist;
- eine am Messrohr angeordnete Vorrichtung zum Erzeugen eines das Messrohr durchdringenden Magnetfeldes; und
- zwei Messelektroden zum Abgreifen einer im fließfähigen Medium induzierten Messspannung.

Eine Ringnut des Standes der Technik weist eine Ankerfläche mit einem Normalenvektor parallel zur Längsrichtung auf, die sich im Wesentlichen in einer Querschnittsebene des Trägerkörpers ausdehnt. Damit ist der sich in der Ringnut erstreckende Stützkörper zwar gegen Kräfte in Längsrichtung gesichert, jedoch nicht gegen ein Drehmoment. Die in Längsrichtung verlaufende erste Vertiefung weist eine Ankerfläche mit einem Normalenvektor auf, der nicht parallel zur Längsrichtung orientiert ist. Beim Wirken eines Drehmomentes auf den Stützkörper wird das Moment auf die Ankerfläche übertragen und eine Drehung des Stützkörpers um die Längsachse des Trägerkörpers unterbunden.

Die Funktion der sich in Fließrichtung erstreckende Vertiefung besteht darin, dass der Stützkörper über die gesamte Länge der ersten Vertiefung mit dem Trägerkörper verankert ist. Die Längs- und Tangentialkräfte auf den Stützkörper werden in vielfache Kraftangriffpunkte in Fließrichtung aufgeteilt und somit punktuell verringert. Handelt es sich beim Stützkörper um einen mittels eines Sinterverfahrens hergestellten Sinterkörpers, so werden mittels der erfindungsgemäßen ersten Vertiefung Rissbildungen beim Abkühlen des Sinterkörpers vermieden.

Zwischen der ersten Vertiefung und dem Liner ist der Stützkörper angeordnet. Somit erstreckt sich ausschließlich der Stützkörper in der ersten Vertiefung und nicht der Liner. Die Messgröße umfasst eine Durchflussgeschwindigkeit, Volumendurchflussrate und/oder Massedurchflussrate, welche jeweils mittels der erfassten induzierten Messspannung ermittelt sind.

Vorteilhafte Ausgestaltung der Erfindung sind Gegenstand der Unteransprüche. Erfindungsgemäß ist die erste Vertiefung zumindest teilweise helikal ausgebildet.

Vorteilhaft an einer helikal - oder schraubenförmig - verlaufenden ersten Vertiefung, ist die sich daraus ergebende Verteilung eines wirkenden Drehmomentes auf die Flanken der Vertiefung entlang der Fließrichtung.

Zusätzlich nimmt erfindungsgemäß nicht nur die Ankerfläche der ersten Vertiefung, auf welche ein wirkendes Drehmoment gelenkt wird, zu, sondern auch die Kraftverteilung auf den Trägerkörper wird gleichmäßiger.

Die erster Vertiefung kann als Einkerbung, Kante und/oder Innengewinde ausgebildet sein. Das Innengewinde ist eine profilierte Einkerbung, die fortlaufend wendelartig - schraubenförmig - in einer zylinderförmigen Innenwand verläuft.

Die helikale erste Vertiefung kann beispielsweise mittels eines Gewindeschneiders/- bohrers oder mittels einer Fräse in den Trägerkörper eingearbeitet sein. Dabei ist für das Erlangen des technischen Effektes das Einhalten einer Gewinde-Norm nicht notwendig.

Eine Ausgestaltung sieht vor, dass der Trägerkörper im Einlaufbereich zumindest teilweise eine Wandstärke von kleiner 7 Millimeter, insbesondere kleiner 5 Millimeter und bevorzugt kleiner 3 Millimeter aufweist.

Bei Trägerkörpern mit Wandstärken kleiner 7 Millimeter, insbesondere kleiner 5 Millimeter und bevorzugt kleiner 3 Millimeter im dünnsten Bereich ist das Einarbeiten beispielsweise einer ringförmigen Schwalbenschwanznut nicht oder nur sehr aufwendig möglich. Das Einbringen einer helikalen ersten Vertiefung hingegen lässt sich einfach und günstig realisieren.

Eine Ausgestaltung sieht vor, dass der Trägerkörper einen Auslaufbereich umfasst, welcher eine zweite Vertiefung aufweist,
wobei die zweite Vertiefung zumindest teilweise spiralförmig ausgebildet ist.

Durch das Einbringen einer zweiten Vertiefung im Auslaufbereich des Trägerkörpers wird der Stützkörper besser gegen eine Verdrehung abgesichert.

Eine Ausgestaltung sieht vor, dass die erste Vertiefung eine erste Windungsrichtung aufweist,
wobei die zweite Vertiefung eine zweite Windungsrichtung aufweist,
wobei die erste Windungsrichtung gleich die zweite Windungsrichtung ist.

Gemäß einer Ausgestaltung erstreckt sich die erste Vertiefung ausgehend vom Einlaufbereich entlang des Messabschnittes und geht in die zweite Vertiefung über. Vorteilhaft daran ist, dass der Stützkörper mit einer komplementären Ausformung, d.h. z.B. einem komplementären Außengewinde in den Trägerkörper eingeschraubt werden kann.

Gemäß einer weiteren Ausgestaltung weisen die beiden Vertiefungen zwar die gleiche Windungsrichtung auf, jedoch bleibt der Messabschnitt frei von der ersten und zweiten Vertiefung. Vorteilhaft an der Ausgestaltung ist, dass ein Herausdrehen des Stützkörpers somit verhindert wird.

Eine Ausgestaltung sieht vor, dass die erste Vertiefung eine erste Windungsrichtung aufweist,
wobei die zweite Vertiefung eine zweite Windungsrichtung aufweist,
wobei die erste Windungsrichtung ungleich die zweite Windungsrichtung ist.

Gemäß einer weiteren Ausgestaltung weisen die erste Vertiefung und die zweite Vertiefung unterschiedliche Windungsrichtungen auf. Vorteilhaft an der Ausgestaltung ist, dass ein Herausdrehen des Stützkörpers somit verhindert wird.

Eine Ausgestaltung sieht vor, dass der Trägerkörper eine Wandstärke aufweist,
wobei der Trägerkörper im Einlaufbereich einen Teilbereich aufweist, in dem die Wandstärke des Trägerkörpers kontinuierlich entgegengesetzt zur Fließrichtung abnimmt,
wobei sich die erste Vertiefung in den Teilbereich erstreckt.

Dadurch nimmt die innere Mantelfläche des Trägerkörpers im Einlaufbereich die Form eines Stumpfkegels an. Der Einlaufbereich entspricht dem Einfüllbereich, in welchem das den Stützkörper bildende Material in den Trägerkörper eingefüllt wird. Die konische Form dient dazu, das Einfüllen des den Stützkörper bildenden Materials - z.B. Sinterkugeln - zu vereinfachen. Der Trägerkörper, insbesondere der Einfüllbereich übernimmt die Funktion eines Trichters. Die Innenmantelfläche des Stützkörpers weist im Einlaufbereich eine zylindrische Form auf.

Eine Ausgestaltung sieht vor, dass der Stützkörper offenporig ausgebildet ist. Das poröse Material kann grundsätzlich Kunststoff, beispielsweise ein offenzelliger Kunststoffschaum, oder eine Keramik, beispielsweise eine Schaumkeramik, oder ein Sintermaterial, mit Poren, sein.

Erfindungsgemäß ist der Stützkörper aus Sintermaterial, insbesondere aus Sinterkugeln gebildet, welche durch ein Sinterverfahren miteinander verbunden sind und Poren bilden.

Eine Offenporigkeit bzw. eine Porosität wird durch die Verwendung feinkörniger Sinterkugeln realisiert, welche in einem Sinterverfahren miteinander verbunden werden und somit einen Sinterkörper bildet. Die sich dabei zwischen den einzelnen Kügelchen bildenden Freiräume entsprechen den Poren.

Das Material des Stützkörpers ist vorteilhafterweise ein sinterfähiges Metall, insbesondere Sinterbronze. Dieses Material verschmilzt nicht im Sintervorgang zu einem kompakten Material, sondern weist noch eine hinreichende Porosität auf. Zugleich ist Metall gegenüber Kunststoff zumeist mechanisch widerstandsfähiger und auch thermisch belastbarer. Schaumkeramiken sind oftmals hart und widerstandfähig, tendieren aber bei Erschütterungen und thermischen Ausdehnungen zum Zerbrechen. Daher wäre eine Anwendung solcher Messrohre begrenzt. Demgegenüber ist insbesondere Sinterbronze sehr gut bearbeitbar. Aufgrund der metallischen Duktilität kommt es zudem nicht zum Materialbruch bei Erschütterungen.

Es ist von Vorteil, wenn das Material des Stützkörpers Sinterkugeln sind, welche durch einen Sintervorgang miteinander verbunden sind, und welche in den Kugelzwischenräumen Poren aufweisen. Dadurch kann eine weiter-verbesserte Widerstandsfähigkeit gegenüber Druckbelastungen erreicht werden. Besonders bevorzugt bestehen die Sinterkugeln dabei aus Bronze.

Nach dem letzten Sinterschritt ist es häufig notwendig, am Einfüllbereich überstehendes Sintermaterial zu entfernen, um somit eine saubere Kante für den anschließend flüssig zu applizierenden Liner zu schaffen. Die Porosität des Stützkörpers erlaubt die Angleichung durch nachträgliches Einpressen des überstehenden Sintermaterials in das Innere des Trägerkörpers bei eingesetztem Sinterkern. Der Stützkörper wird dadurch komprimiert. Es kann jedoch passieren, dass sich im Stützkörper vorgesehene Aufnahmen auf Grund der in Längsrichtung wirkende Kraft verschieben, wodurch ein Einbringen des aufzunehmenden Bauteils - z.B. Messelektrode oder Polschuh - erschwert oder gar unmöglich wird. Es hat sich jedoch gezeigt, dass bereits durch das Einbringen einer helikalen ersten Vertiefung, ein Verschieben der Aufnahmen vermieden werden kann.

Eine Ausgestaltung sieht vor, dass die erste Vertiefung und/oder die zweite Vertiefung eine radiale Tiefe von 0,5 Millimeter bis 2 Millimeter aufweist.

Für eine optimale Porengröße zur Anbindung des Liners an den Stützkörper sollten die Sinterkugeln einen Durchmesser von mehr als 0,1 mm aufweisen. Dem entsprechend ist es vorteilhaft, wenn die erste und/oder zweite Vertiefung eine radiale Tiefe von 0,5 Millimeter bis 2 Millimeter aufweist.

Eine Ausgestaltung sieht vor, dass die erste Vertiefung sich ausschließlich in einem ersten Vertiefungsbereich erstreckt,
wobei die zweite Vertiefung sich ausschließlich in einem zweiten Vertiefungsbereich erstreckt,
wobei der erste Vertiefungsbereich und der zweite Vertiefungsbereich zusammengenommen durch eine charakteristische Länge in Längsrichtung beschreibbar ist,
wobei die charakteristische Länge mindestens 12%, insbesondere mindestens 12% und maximal 88%, insbesondere maximal 75% und bevorzugt maximal 65% einer Gesamtlänge des Trägerkörpers entspricht.

Der erste Vertiefungsbereich weist eine erste Länge und der zweite Vertiefungsbereich eine zweite Länge auf. Die Summe der ersten Länge und der zweiten Länge bildet eine charakteristische Länge. Es hat sich herausgestellt, dass eine charakteristische Länge von mindestens 12% notwendig ist, um das Problem mit dem Verschieben der Aufnahme in Längsrichtung oder in Drehrichtung zu unterbinden.

Eine Ausgestaltung sieht vor, dass die spiralförmige erste Vertiefung und/oder die zweite Vertiefung einen Steigungswinkel *α* aufweist,
wobei der Steigungswinkel *α* zwischen 0,14° und 4° liegt.

Das entspricht einer Steigung der Vertiefung von ca. 0,2% bis 7%.

Eine Ausgestaltung sieht vor, dass der Stützkörper ein Stützkörpermaterial umfasst,
wobei die erste Vertiefung durch das Stützkörpermaterial ausgefüllt ist.

Es ist besonders vorteilhaft, wenn sich das Stützkörpermaterial entlang sämtlicher Außenflächen der ersten Vertiefung erstreckt und diese berühren. Das heißt, dass die Vertiefung im Wesentlichen vollständig durch das Stützkörpermaterial gefüllt ist.

Eine Ausgestaltung sieht vor, dass das magnetisch-induktive Durchflussmessgerät einen Messabschnitt aufweist, in welchem der Trägerkörper eine Öffnung und der Stützkörper eine Aufnahme in Form einer Vertiefung zum Anordnen der Vorrichtung zum Erzeugen des Magnetfeldes am Messrohr aufweist,
wobei die Vorrichtung zum Erzeugen des Magnetfeldes in die Öffnung und die Aufnahme angeordnet ist.

Eine Ausgestaltung sieht vor, dass die Aufnahme bündig an die Öffnung anschließt,
wobei eine Längsachse der Aufnahme koaxial zur Längsachse der Öffnung verläuft.

Die Anschlussfläche des Stützkörpers, mit welcher das Messrohr an einen Prozessanschluss anschließbar ist, sollte vorteilhafterweise teilweise oder vollständig mit dem Materialwulst aus Linermaterial bedeckt sein, um so eine breite Dichtfläche zu schaffen.

Die Erfindung wird anhand der nachfolgenden Figuren näher erläutert. Es zeigt:
Fig. 1: eine Seitenansicht auf eine teilweise geschnittene Ausgestaltung eines erfindungsgemäßen magnetisch-induktiven Durchflussmessgerätes;
Fig. 2: eine Vergrößerung des Auslaufbereiches der Fig. 1;
Fig. 3: eine weitere Vergrößerung des Auslaufbereiches einer Ausgestaltung des erfindungsgemäßen magnetisch-induktiven Durchflussmessgerätes;
Fig. 4: einen Längsschnitt einer weiteren Ausgestaltung des erfindungsgemäßen magnetisch-induktiven Durchflussmessgerätes.

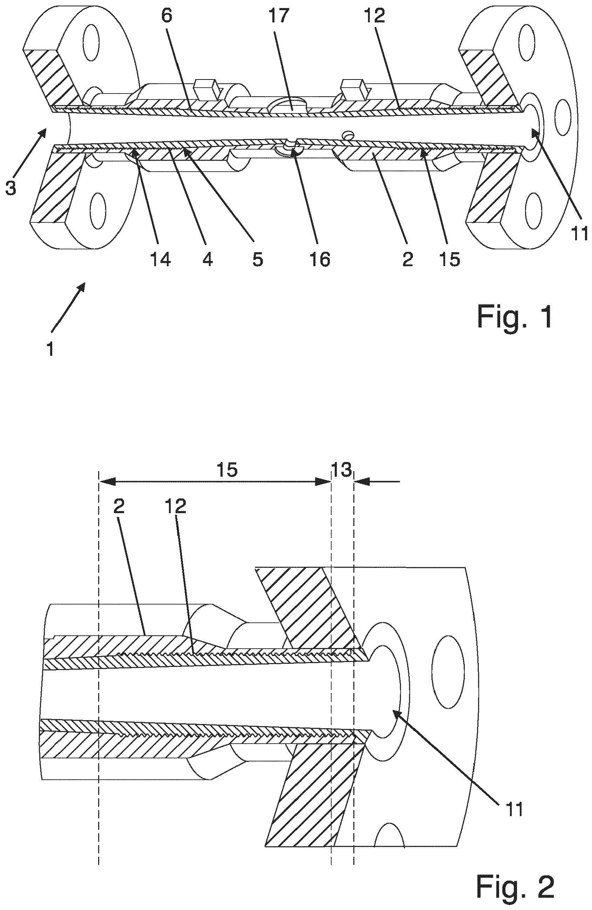

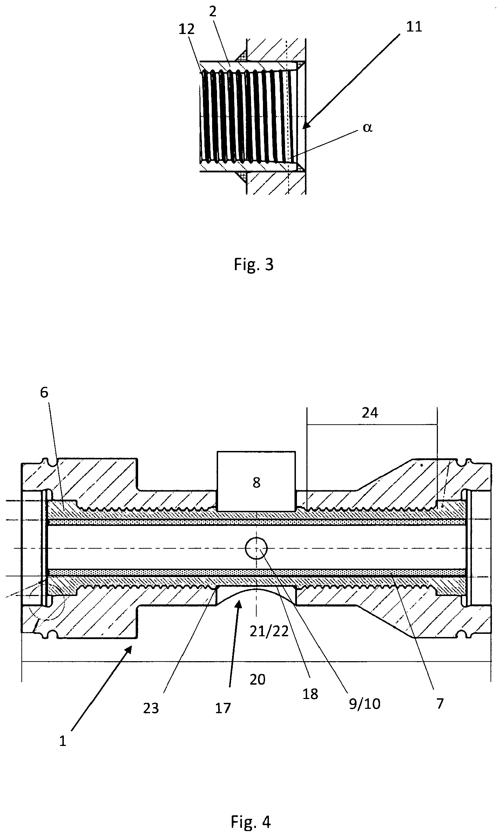

Die Fig. 1 zeigt eine Seitenansicht auf eine teilweise geschnittene Ausgestaltung eines erfindungsgemäßen magnetisch-induktiven Durchflussmessgerätes. Der Aufbau und das Messprinzip eines magnetisch-induktiven Durchflussmessgerätes sind grundsätzlich bekannt. Durch ein Messrohr 1 wird ein Medium geleitet, welches eine elektrische Leitfähigkeit aufweist. Eine Vorrichtung zum Erzeugen eines Magnetfeldes ist so im Messabschnitt 16 angebracht, dass sich die Magnetfeldlinien im Wesentlichen senkrecht zu einer durch die Messrohrachse definierten Längsrichtung orientieren. Die Vorrichtung umfasst mindestens zwei Komponenten. Als erste Komponente eignet sich vorzugsweise eine Sattelspule oder eine Spule. Die zweite Komponente weist eine magnetisch leitenden, insbesondere weichmagnetischen Werkstoff auf und umfasst eine Spulenkernanordnung aus mindestens einem Spulenkern um welchen ein Spulendraht der Spule gewickelt ist, mindestens eine Polschuhanordnung mit mindestens einem Polschuh und/oder eine Feldrückführungsanordnung aus mindestens zwei Feldrückführungen. Der Polschuh ist in eine Öffnung 17 im Trägerkörper 2 eingesetzt. Bei angelegtem Magnetfeld entsteht im Messrohr 1 eine durchflussabhängige Potentialverteilung, die mit zwei an der Innenwand des Messrohres 1 gegenüberliegend, angebrachten Messelektroden abgegriffen wird. In der Regel sind diese diametral angeordnet und bilden eine Elektrodenachse bzw. werden durch eine Querachse geschnitten, die senkrecht zu den Magnetfeldlinien und der Längsachse des Messrohres 1 verläuft. Anhand der gemessenen Messspannung U kann die Durchflussgeschwindigkeit *v* und, unter zusätzliche Berücksichtigung der Rohrquerschnittsfläche, der Volumendurchfluss *V̇* des Mediums bestimmt werden. Um das Ableiten der an der ersten und zweiten Messelektrode anliegenden Messspannung über das Messrohr 1 zu verhindern, wird die Innenwand mit einem isolierenden Material, beispielsweise einem Kunststoff-Liner ausgekleidet (in der Fig. 1 nicht, jedoch in der Fig. 4 abgebildet). Zum Befestigen des Liners wird ein Stützkörper 6 zwischen Trägerkörper 2 und Liner angeordnet. Gemäß der abgebildeten Ausgestaltung weist der Stützkörper 6 einen Werkstoff auf, welcher Sinterkugeln umfasst. Der Stützkörper 6 ist mittels eines Sinterverfahrens hergestellt. Dafür wird eine Sinterkern in das Innere des Trägerkörpers 2 eingeführt und die sich aus dem Sinterkern und der inneren Mantelfläche des Trägerkörpers 2 bildende Kavität mit Sinterkugeln gefüllt. Das Bilden des Stützkörpers 6 erfolgt unter erhöhtem Druck und/oder Temperatur. Nach der Bildung des Stützkörpers 6 wird ein fließfähiger Liner auf den Stützkörper 6 appliziert. Der fließfähige Liner verläuft in die Poren des Stützkörpers 6, wodurch die Befestigung des Liners an den Stützkörper 6 und somit auch an den Trägerkörper 2 realisiert wird.

Das durch die Vorrichtung zum Erzeugen eines Magnetfeldes aufgebaute Magnetfeld wird durch einen mittels einer Betriebsschaltung getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messschaltung ist dazu eingerichtet die an der ersten und zweiten Messelektroden anliegende, induzierte Messspannung auszulesen und eine Auswerteschaltung ist dazu ausgebildet die Durchflussgeschwindigkeit *v* und/oder den Volumendurchfluss *V̇* des Mediums in Abhängigkeit von der gemessenen Messspannung zu ermitteln.

Handelsübliche magnetisch-induktive Durchflussmessgeräte weisen zusätzlich zu den Messelektroden zwei weitere Elektroden auf. Zum einen dient eine optimalerweise am höchsten Punkt im Messrohr 1 angebrachte Füllstandsüberwachungselektrode dazu, eine Teilbefüllung des Messrohres 1 zu detektiere, und ist dazu eingerichtet diese information an den Nutzer weiterzuleiten und/oder den Füllstand bei der Ermittlung des Volumendurchflusses V zu berücksichtigen. Des Weiteren dient eine Bezugselektrode, die üblicherweise diametral zur Füllstandsüberwachungselektrode bzw. am untersten Punkt des Messrohrquerschnittes angebracht ist, dazu, eine ausreichende Erdung des Mediums zu gewährleisten. Es sind magnetisch-induktive Durchflussmessgeräte bekannt, welche einen zusätzlichen Temperatursensor aufweisen, der sich in das Innere des Messrohres 1 erstreckt.

Im Einlaufbereich 3 des Trägerkörpers 2 ist eine erste Vertiefung 4 an der Innenseite 5 eingearbeitet. Die erste Vertiefung 4 ist helikal ausgebildet. Des Weiteren weist der Auslaufbereich 11 des Trägerkörpers 2 eine zweite Vertiefung 12 auf, welche helikal ausgebildet ist. Im Einlaufbereich 3 liegt ein Teilbereich 13 vor, in dem die Wandstärke des Trägerkörpers 2 kontinuierlich entgegengesetzt zur Fließrichtung abnimmt. Die erste Vertiefung 4 erstreckt sich in den Teilbereich 13. Aus Symmetriegründen weist der Auslaufbereich auch einen Teilbereich auf, in dem die Wandstärke des Trägerkörpers 2 kontinuierlich in Fließrichtung abnimmt und in den sich die zweite Vertiefung 12 erstreckt.

Gemäß der abgebildeten Ausgestaltung variiert die Materialstärke des Stützkörpers 6 in Fließrichtung. Im Messabschnitt des Messrohres 1 weist die Innenmantelfläche des Stützkörpers 6 eine zylindrische Grundform auf. In Richtung des Einlaufes und des Auslauf nimmt die Querschnittsfläche des Stützkörpers stetig zu. Die Innenmantelfläche ist in dem Abschnitt als Konus ausgebildet.

Die Fig. 2 zeigt eine Vergrößerung des Auslaufbereiches 11 der in der Fig. 1 abgebildeten Ausgestaltung. Aus Symmetriegründen entspricht die Ausgestaltung des Auslaufbereiches 11 der Ausgestaltung des Einlaufbereiches. Der Auslaufbereich 11 bzw. der zweite Vertiefungsbereich 15 weist einen Teilbereich 13 auf, in welchem die Wandstärke des Trägerrohres 2 in Fließrichtung abnimmt. Dies dient dazu ein Einfüllen der Sinterkugeln in die durch den Sinterkern und Trägerkörper gebildete Kavität zu erleichtern. Die Innenmantelfläche des Stützkörpers weist im Teilbereich 13 eine zylindrische Grundform auf. Wie außerdem zu erkennen ist, weist die zweite Vertiefung 12 eine in Fließrichtung variierende radiale Tiefe auf.

Die Fig. 3 zeigt eine weitere Vergrößerung des Auslaufbereiches 11 der Ausgestaltung aus Fig. 1. Die erste Vertiefung und die zweite Vertiefung 12 weisen jeweils einen Steigungswinkel *α* auf.

Die Fig. 4 zeigt einen Längsschnitt einer weiteren Ausgestaltung des erfindungsgemäßen magnetisch-induktiven Durchflussmessgerätes. Gemäß der abgebildeten Ausgestaltung weist der Stützkörper 6 eine Innenmantelfläche auf, deren Grundform zylindrisch ausgebildet ist. Auf die Innenmantelfläche erstreckt sich der elektrisch isolierende Liner 7. Gemäß der erfinderischen Ausgestaltung ist der Liner 7 aus einem flüssig auf den Stützkörper aufgebrachten und danach ausgehärteten Kunststoff gebildet. Durch das Applizieren des Liners 7 in einem flüssigen Zustand kann sich der Liner in die durch das Sinterverfahren hergestellte Poren des Stützkörpers erstrecken und somit auch verhaken.

Zwei diametral angeordnete Messelektroden 9, 10 sind dazu eingerichtet eine in einem fließenden Medium induzierte Messspannung abzugreifen. Dafür sind die Messelektroden 9, 10 mit einer Messschaltung (nicht abgebildet) verbunden. Die Messelektroden 9, 10 sind im Messabschnitt des Messrohres 1 angeordnet, ebenso wie die Vorrichtung zum Erzeugen eines Magnetfeldes 8. Diese ist formschlüssig in einer Aufnahme 18 angeordnet, welche in dem Stützkörper 6 gebildet ist und erstreckt sich durch eine im Trägerkörper 2 vorgesehene Öffnung 17. Aufnahme 18 und Öffnung 17 weisen jeweils eine Längsachse 21, 22 auf. In der abgebildeten Ausgestaltung liegen die beiden Längsachsen 21, 22 aufeinander. Die Aufnahme 18 weist eine Kante 23 auf, welche sich bündig an die Innenmantelfläche der Öffnung 17 anschließt.

Der Trägerkörper 2 weist eine Gesamtlänge 20 auf. Der Trägerkörper weist einen ersten Vertiefungsbereich 14 und einen zweiten Vertiefungsbereich 15 auf. Der erste Vertiefungsbereich 14 weist eine erste Länge auf und der zweite Vertiefungsbereich 15 weist eine zweite Länge 24 auf. Zusammengenommen bilden die erste Länge und die zweite Länge 24 eine charakteristische Länge. Die charakteristische Länge entspricht mindestens 12% der Gesamtlänge 20.

Anders als in der zuvor abgebildeten Ausgestaltung ist die Innenmantelfläche des Trägerkörpers 2 im ersten Vertiefungsbereich 14 und im zweiten Vertiefungsbereich 15 die zylindrisch ausgebildet.

### Bezugszeichenliste

- 1: Messrohr
- 2: Trägerkörper
- 3: Einlaufbereich
- 4: erste Vertiefung
- 5: Innenseite
- 6: Stützkörper
- 7: Liner
- 8: Vorrichtung zum Erzeugen eines Magnetfeldes
- 9: Messelektrode
- 10: Messelektrode
- 11: Auslaufbereich
- 12: Zweite Vertiefung
- 13: Teilbereich
- 14: ersten Vertiefungsbereich
- 15: zweiten Vertiefungsbereich
- 16: Messabschnitt
- 17: Öffnung
- 18: Aufnahme
- 20: Gesamtlänge
- 21: Längsachse der Aufnahme
- 22: Längsachse der Öffnung
- 23: Kante
- 24: Zweite Länge

- *α*: Steigungswinkel

## Patentansprüche

1. Magnetisch-induktives Durchflussmessgerät zum Ermitteln einer strömungsgeschwindigkeitsabhängigen, in einem fließfähigen Medium induzierten Messgröße, umfassend:
- ein Messrohr (1) zum Führen des fließfähigen Mediums in eine Fließrichtung,
wobei das Messrohr (1) einen Trägerkörper (2) umfasst,
wobei das Messrohr (1) einen Einlaufbereich (3) umfasst, in welchem der Trägerkörper (2) eine erste Vertiefung (4) aufweist, die sich an einer Innenseite (5) des Trägerkörpers (2) befindet,
wobei sich die erste Vertiefung (4) fortlaufend in Fließrichtung erstreckt,
wobei das Messrohr (1) einen Stützkörper (6) zum Stabilisieren eines Liners (7) umfasst,
wobei der Stützkörper (6) aus Sinterkugeln gebildet ist, welche durch ein Sinterverfahren miteinander verbunden sind und Poren bilden,
wobei der Stützkörper (6) zwischen dem Trägerkörper (2) und dem Liner (7) angeordnet ist,
wobei sich der Stützkörper (6) in die erste Vertiefung (4) erstreckt und somit formschlüssig mit dem Trägerkörper (2) verbunden ist,
wobei die erste Vertiefung (4) zumindest teilweise helikal ausgebildet ist;
- eine am Messrohr (1) angeordnete Vorrichtung (8) zum Erzeugen eines das Messrohr (1) durchdringenden Magnetfeldes; und
- zwei Messelektroden (9, 10) zum Abgreifen einer im fließfähigen Medium induzierten Messspannung.

2. Magnetisch-induktives Durchflussmessgerät nach Anspruch 1,
wobei der Trägerkörper (2) im Einlaufbereich (3) zumindest teilweise eine Wandstärke von kleiner 7 Millimeter, insbesondere kleiner 5 Millimeter und bevorzugt kleiner 3 Millimeter aufweist.

3. Magnetisch-induktives Durchflussmessgerät nach mindestens einem der vorhergehenden Ansprüche,
wobei der Trägerkörper (2) einen Auslaufbereich (11) umfasst, welcher eine zweite Vertiefung (12) aufweist,
wobei die zweite Vertiefung (12) zumindest teilweise spiralförmig ausgebildet ist.

4. Magnetisch-induktives Durchflussmessgerät nach Anspruch 3,
wobei die erste Vertiefung (4) eine erste Windungsrichtung aufweist,
wobei die zweite Vertiefung (12) eine zweite Windungsrichtung aufweist,
wobei die erste Windungsrichtung gleich die zweite Windungsrichtung ist.

5. Magnetisch-induktives Durchflussmessgerät nach Anspruch 3,
wobei die erste Vertiefung (4) eine erste Windungsrichtung aufweist,
wobei die zweite Vertiefung (12) eine zweite Windungsrichtung aufweist,
wobei die erste Windungsrichtung ungleich die zweite Windungsrichtung ist.

6. Magnetisch-induktives Durchflussmessgerät nach mindestens einem der vorhergehenden Ansprüche,
wobei der Trägerkörper (2) eine Wandstärke aufweist,
wobei der Trägerkörper (2) im Einlaufbereich (3) einen Teilbereich (13) aufweist, in dem die Wandstärke des Trägerkörpers (2) kontinuierlich entgegengesetzt zur Fließrichtung abnimmt,
wobei sich die erste Vertiefung (4) in den Teilbereich (13) erstreckt.

7. Magnetisch-induktives Durchflussmessgerät nach mindestens einem der vorhergehenden Ansprüche,
wobei die erste Vertiefung (4) und/oder die zweite Vertiefung (12) eine radiale Tiefe von 0,5 Millimeter bis 2 Millimeter aufweist.

8. Magnetisch-induktives Durchflussmessgerät nach mindestens einem der Ansprüche 3 bis 5,
wobei die erste Vertiefung (4) sich ausschließlich in einem ersten Vertiefungsbereich (14) erstreckt,
wobei die zweite Vertiefung (12) sich ausschließlich in einem zweiten Vertiefungsbereich (15) erstreckt,
wobei der erste Vertiefungsbereich (14) und der zweite Vertiefungsbereich (15) zusammengenommen durch eine charakteristische Länge in Längsrichtung beschreibbar ist,
wobei die charakteristische Länge mindestens 12%, insbesondere mindestens 12% und maximal 88%, insbesondere maximal 75% und bevorzugt maximal 65% einer Gesamtlänge (20) des Trägerkörpers (2) entspricht.

9. Magnetisch-induktives Durchflussmessgerät nach mindestens einem der vorhergehenden Ansprüche,
wobei die spiralförmige erste Vertiefung (4) und/oder die zweite Vertiefung (12) einen Steigungswinkel *α* aufweist,
wobei der Steigungswinkel *α* zwischen 0,14° und 4° liegt.

10. Magnetisch-induktives Durchflussmessgerät nach mindestens einem der vorhergehenden Ansprüche,
wobei der Stützkörper (6) ein Stützkörpermaterial umfasst,
wobei die erste Vertiefung (4) durch das Stützkörpermaterial ausgefüllt ist.

11. Magnetisch-induktives Durchflussmessgerät nach mindestens einem der vorhergehenden Ansprüche,
wobei das magnetisch-induktive Durchflussmessgerät einen Messabschnitt (16) aufweist, in welchem der Trägerkörper (2) eine Öffnung (17) und der Stützkörper (6) eine Aufnahme (18) in Form einer Vertiefung zum Anordnen der Vorrichtung (8) zum Erzeugen des Magnetfeldes am Messrohr (1) aufweist,
wobei die Vorrichtung (8) zum Erzeugen des Magnetfeldes in die Öffnung und die Aufnahme (18) angeordnet ist.

12. Magnetisch-induktives Durchflussmessgerät nach Anspruch 11,
wobei die Aufnahme (18) bündig an die Öffnung (17) anschließt,
wobei eine Längsachse der Aufnahme (21) koaxial zur Längsachse der Öffnung (22) verläuft.

## Claims

1. Magnetic-inductive flowmeter for determining a flow velocity-dependent measured variable induced in a flowable medium, comprising
- a measuring tube (1) for guiding the flowable medium in a flow direction,
wherein the measuring tube (1) comprises a carrier body (2),
wherein the measuring tube (1) comprises an inlet region (3) in which the carrier body (2) has a first depression (4) which is located on an inner side (5) of the carrier body (2),
wherein the first depression (4) extends continuously in the direction of flow,
wherein the measuring tube (1) comprises a support body (6) for stabilising a liner (7), wherein the supporting body (6) is formed from sintered spheres which are joined together by a sintering process and form pores,
wherein the support body (6) is arranged between the carrier body (2) and the liner (7),
wherein the supporting body (6) extends into the first recess (4) and is thus positively connected to the carrier body (2),
wherein the first recess (4) is at least partially helical;
- a device (8) arranged on the measuring tube (1) for generating a magnetic field penetrating the measuring tube (1); and
- two measuring electrodes (9, 10) for tapping a measuring voltage induced in the flowable medium.

2. Magnetic-inductive flowmeter according to claim 1,
wherein the carrier body (2) has a wall thickness of less than 7 millimetres, in particular less than 5 millimetres and preferably less than 3 millimetres, at least in part in the inlet region (3).

3. Magnetic-inductive flowmeter according to at least one of the preceding claims,
wherein the carrier body (2) comprises an outlet region (11) which has a second recess (12),
wherein the second recess (12) is at least partially spiral-shaped.

4. Magnetic-inductive flowmeter according to claim 3,
wherein the first recess (4) has a first winding direction,
wherein the second recess (12) has a second winding direction,
wherein the first winding direction is equal to the second winding direction.

5. Magnetic-inductive flowmeter according to claim 3,
wherein the first recess (4) has a first winding direction,
wherein the second recess (12) has a second winding direction,
wherein the first winding direction is unequal to the second winding direction.

6. Magnetic-inductive flowmeter according to at least one of the preceding claims,
wherein the carrier body (2) has a wall thickness,
wherein the carrier body (2) has a partial region (13) in the inlet region (3), in which the wall thickness of the carrier body (2) decreases continuously in the opposite direction to the flow direction,
wherein the first depression (4) extends into the partial area (13).

7. Magnetic-inductive flowmeter according to at least one of the preceding claims,
wherein the first recess (4) and/or the second recess (12) has a radial depth of 0.5 millimetres to 2 millimetres.

8. Magnetic-inductive flowmeter according to at least one of claims 3 to 5,
wherein the first depression (4) extends exclusively in a first depression region (14),
wherein the second depression (12) extends exclusively in a second depression region (15),
wherein the first recess region (14) and the second recess region (15) taken together can be described by a characteristic length in the longitudinal direction,
wherein the characteristic length corresponds to at least 12%, in particular at least 12% and at most 88%, in particular at most 75% and preferably at most 65% of a total length (20) of the carrier body (2).

9. Magnetic-inductive flowmeter according to at least one of the preceding claims,
wherein the spiral-shaped first depression (4) and/or the second depression (12) has a pitch angle α,
wherein the pitch angle α is between 0.14° and 4°.

10. Magnetic-inductive flowmeter according to at least one of the preceding claims,
wherein the support body (6) comprises a support body material,
wherein the first depression (4) is filled by the support body material.

11. Magnetic-inductive flowmeter according to at least one of the preceding claims,
wherein the electromagnetic flowmeter has a measuring section (16), in which the support body (2) has an opening (17) and the support body (6) has a receptacle (18) in the form of a recess for arranging the device (8) for generating the magnetic field on the measuring tube (1),
wherein the device (8) for generating the magnetic field is arranged in the opening and the receptacle (18).

12. Magnetic-inductive flowmeter according to claim 11,
wherein the receptacle (18) is flush with the opening (17),
wherein a longitudinal axis of the receptacle (21) extends coaxially to the longitudinal axis of the opening (22).

## Revendications

1. Débitmètre électromagnétique pour déterminer une grandeur de mesure dépendant de la vitesse d'écoulement et induite dans un milieu fluide, comprenant :
- un tube de mesure (1) pour guider le milieu fluide dans une direction d'écoulement,
le tube de mesure (1) comprenant un corps de support (2),
le tube de mesure (1) comprenant une zone d'entrée (3) dans laquelle le corps de support (2) présente un premier renfoncement (4) qui se trouve sur un côté intérieur (5) du corps de support (2),
le premier renfoncement (4) s'étendant de manière continue dans la direction d'écoulement,
dans lequel le tube de mesure (1) comprend un corps de support (6) pour stabiliser un liner (7),
le corps de support (6) étant formé de billes frittées qui sont reliées entre elles par un procédé de frittage et qui forment des pores,
le corps de support (6) étant disposé entre le corps de support (2) et le liner (7),
le corps d'appui (6) s'étendant dans le premier renfoncement (4) et étant ainsi relié par complémentarité de forme au corps de support (2),
le premier renfoncement (4) étant au moins partiellement hélicoïdal ;
- un dispositif (8) disposé sur le tube de mesure (1) pour générer un champ magnétique traversant le tube de mesure (1) ; et
- deux électrodes de mesure (9, 10) pour prélever une tension de mesure induite dans le milieu fluide.

2. Débitmètre électromagnétique selon la revendication 1,
le corps de support (2) présentant dans la zone d'entrée (3) au moins partiellement une épaisseur de paroi inférieure à 7 millimètres, en particulier inférieure à 5 millimètres et de préférence inférieure à 3 millimètres.

3. Débitmètre électromagnétique selon au moins l'une des revendications précédentes,
Le corps de support (2) comprend une zone de sortie (11) qui présente un deuxième renfoncement (12),
la deuxième cavité (12) étant au moins partiellement en forme de spirale.

4. Débitmètre électromagnétique selon la revendication 3,
le premier renfoncement (4) présentant un premier sens d'enroulement,
le deuxième renfoncement (12) présentant un deuxième sens d'enroulement,
le premier sens d'enroulement étant égal au deuxième sens d'enroulement.

5. Débitmètre électromagnétique selon la revendication 3,
dans lequel le premier renfoncement (4) présente un premier sens d'enroulement,
le deuxième renfoncement (12) présentant un deuxième sens d'enroulement,
le premier sens d'enroulement étant différent du deuxième sens d'enroulement.

6. Débitmètre électromagnétique selon au moins l'une des revendications précédentes,
dans lequel le corps de support (2) présente une épaisseur de paroi,
le corps de support (2) présentant dans la zone d'entrée (3) une zone partielle (13) dans laquelle l'épaisseur de paroi du corps de support (2) diminue de manière continue dans le sens opposé au sens d'écoulement,
le premier renfoncement (4) s'étendant dans la zone partielle (13).

7. Débitmètre électromagnétique selon au moins l'une des revendications précédentes,
La première cavité (4) et/ou la deuxième cavité (12) présentant une profondeur radiale de 0,5 millimètre à 2 millimètres.

8. Débitmètre électromagnétique selon au moins l'une des revendications 3 à 5,
dans lequel le premier renfoncement (4) s'étend exclusivement dans une première zone de renfoncement (14),
le deuxième renfoncement (12) s'étendant exclusivement dans une deuxième zone de renfoncement (15),
la première zone de creux (14) et la deuxième zone de creux (15) prises ensemble pouvant être décrites par une longueur caractéristique dans la direction longitudinale,
la longueur caractéristique correspondant au moins à 12%, en particulier au moins à 12% et au maximum à 88%, en particulier au maximum à 75% et de préférence au maximum à 65% d'une longueur totale (20) du corps de support (2).

9. Débitmètre électromagnétique selon au moins l'une des revendications précédentes,
dans lequel la première cavité (4) et/ou la deuxième cavité (12) en forme de spirale présente un angle d'inclinaison α,
l'angle d'hélice α étant compris entre 0,14° et 4°.

10. Débitmètre électromagnétique selon au moins l'une des revendications précédentes,
dans lequel le corps de support (6) comprend un matériau de corps de support,
le premier renfoncement (4) étant rempli par le matériau du corps de support.

11. Débitmètre électromagnétique selon au moins l'une des revendications précédentes,
le débitmètre électromagnétique présentant une section de mesure (16) dans laquelle le corps de support (2) présente une ouverture (17) et le corps d'appui (6) un logement (18) sous la forme d'un renfoncement pour disposer le dispositif (8) destiné à générer le champ magnétique sur le tube de mesure (1),
le dispositif (8) de génération du champ magnétique étant disposé dans l'ouverture et le logement (18).

12. Débitmètre électromagnétique selon la revendication 11,
le logement (18) se raccordant de manière affleurante à l'ouverture (17),
un axe longitudinal du logement (21) étant coaxial à l'axe longitudinal de l'ouverture (22).
